(19) Europäisches Patentamt European Patent Office Office européen des brevets

(11) **EP 4 549 289 B1**

(12)

# EUROPEAN PATENT SPECIFICATION

(45) Date of publication and mention
of the grant of the patent:
**24.06.2026 Bulletin 2026/26**

(21) Application number: **24179745.5**

(22) Date of filing: **04.06.2024**

(51) International Patent Classification (IPC):
**B62D 7/15** *(2006.01)*      **B62D 15/02** *(2006.01)*

(52) Cooperative Patent Classification (CPC):
**B62D 7/1509; B62D 15/0285**

(54) **APPARATUS AND METHOD FOR CONTROLLING FOUR-WHEEL INDEPENDENT STEERING VEHICLE**

VORRICHTUNG UND VERFAHREN ZUR STEUERUNG EINES FAHRZEUGS MIT UNABHÄNGIGER LENKUNG MIT VIER RÄDERN

APPAREIL ET PROCÉDÉ DE COMMANDE DE VÉHICULE À DIRECTION INDÉPENDANTE À QUATRE ROUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.10.2023 KR 20230148083**

(43) Date of publication of application:
**07.05.2025 Bulletin 2025/19**

(73) Proprietor: **Hyundai Mobis Co., Ltd.
Gangnam-gu
Seoul 06141 (KR)**

(72) Inventor: **LEE, Jong Min
Yongin-si, Gyeonggi-do 16891 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
DE-A1- 102005 025 203      DE-B3- 102021 115 823
JP-A- 2009 078 693      JP-A- 2011 225 019
US-A1- 2021 380 165

**Description**

**BACKGROUND**

FIELD

Exemplary embodiments of the present disclosure relate to an apparatus and method for controlling a four-wheel independent steering vehicle for a traveling mode in a lateral direction (or CRAB mode).

DISCUSSION OF THE BACKGROUND

Recently, researches are being conducted on an in-wheel motor system in which motors are respectively embedded in four wheels of a vehicle and independently operate the four wheels.

The in-wheel motor system may be organically coupled to the vehicle to implement a four-wheel independent driving and four-wheel independent steering system, thereby providing more flexible and various traveling performance.

A four-wheel independent steering vehicle includes a steering angle sensor for each steering apparatus (e.g., a front wheel steering apparatus, a rear wheel steering apparatus).

A conventional and general vehicle changes a traveling direction thereof by steering only front wheels. For this reason, the traveling direction of the vehicle does not coincide with a viewing direction of a driver because occasions when the front and rear wheels generate lateral forces are different. However, in the four-wheel independent steering vehicle, the steering system is applied to the rear wheels as well, thereby reducing a rotation radius of the vehicle while the driver parks the vehicle or turns the vehicle at low velocity and improving traveling stability when the driver changes the direction of the vehicle while driving the vehicle at high velocity.

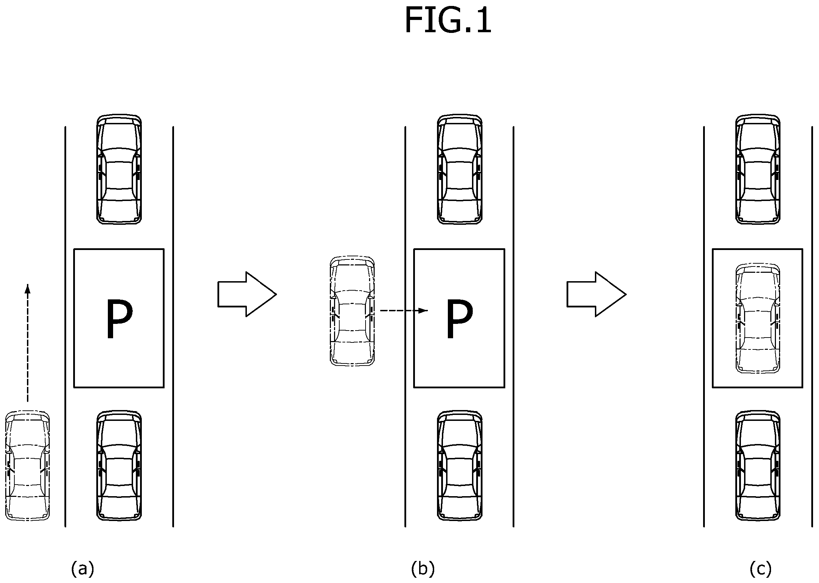

Among the traveling modes of the four-wheel independent steering vehicle, the traveling mode in a lateral direction (or CRAB mode), as illustrated in FIG. 1, is a mode that allows the vehicle to travel in the lateral direction (that is, a lateral direction of 90 degrees on the front), which facilitates parking in a narrow space.

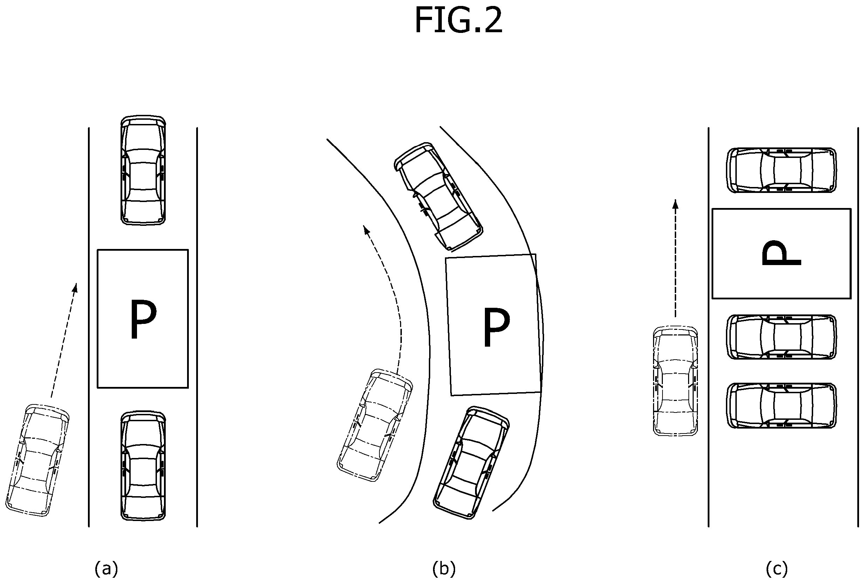

However, as illustrated in FIG. 2, there is a problem in that it is not possible to perform ideal parking using the CRAB mode as described above in FIG. 1, depending on an angle between the vehicle and a parking surface (see FIG. 2A), a position and shape of the parking surface (e.g., a curved road, an arterial road, a corner portion, and the like) (see FIG. 2B), and a direction of the vehicle entering the parking surface (e.g., a lateral direction and a longitudinal direction) (see FIG. 2C).

Therefore, there is a need for a method of controlling the traveling mode in a lateral direction (or CRAB mode) for each steering apparatus (e.g., a front wheel steering apparatus, a rear wheel steering apparatus) separately depending on the angle between the vehicle and the parking surface, the position and shape of the parking surface, and the direction of the vehicle entering the parking surface, and the like, in order to automatically perform safe and fast parking.

The background technology of the present disclosure is disclosed in Korean Patent No. 10-2274120 (registered on July 1, 2021 and entitled 'APPARATUS AND METHOD FOR CONTROLLING REAR WHEEL STEERING SYSTEM'). Furthermore, documents JP2009078693A and DE102005025203A1 also show an apparatus and a method for controlling a four-wheel independent steering vehicle.

**SUMMARY**

According to one aspect of the present disclosure, various embodiments are directed to providing an apparatus and method for controlling a four-wheel independent steering vehicle, which is capable of separately controlling a traveling mode in a lateral direction (or CRAB mode) on each steering apparatus of the four-wheel independent steering vehicle to allow the vehicle to automatically perform safe and fast parking in various parking situations. The invention is as defined in independent claims 1 and 6.

There is provided an apparatus for controlling a four-wheel independent steering vehicle according to one aspect of the present disclosure, the apparatus may include: a sensor module; and a processor configured to perform parking through selective control of a front-wheel drive module and a rear-wheel drive module in consideration of at least one of an angle between the vehicle and a parking surface, a position and shape of the parking surface, and a direction of the vehicle entering the parking surface, on the basis of information detected through the sensor module, upon parking using a CRAB mode of the four-wheel independent steering vehicle.

According to the invention, the processor may check whether the parking surface is available for parking in a lateral direction or a longitudinal direction on the basis of the information detected through the sensor module.

According to the invention, the processor may check whether a longitudinal direction of the vehicle is parallel to a longitudinal direction of the parking surface or a long side of a rectangle that marks the parking surface, when the parking surface is available for parking in the lateral direction.

According to the invention, when the longitudinal direction of the vehicle is not parallel to the longitudinal direction of the parking surface, the processor may control a drive module that drives a wheel that is further away from the long side of the parking surface, among the front-wheel drive module and the rear-wheel drive module, according to a specified setting, to allow the drive module to approach the parking surface so that the longitudinal direction of the vehicle becomes parallel to the longitudinal direction of the parking surface.

According to the invention, when the longitudinal direction of the vehicle is not parallel to the longitudinal direction of the parking surface, the processor may control a drive module that drives a wheel that is closer to the long side of the parking surface, among the front-wheel drive module and the rear-wheel drive module, according to a specified setting, to allow the drive module to move away from the parking surface so that the longitudinal direction of the vehicle becomes parallel to the longitudinal direction of the parking surface.

In an embodiment, the processor may simultaneously control the front-wheel drive module and the rear-wheel drive module in the CRAB mode, when the longitudinal direction of the vehicle is parallel to the longitudinal direction of the parking surface, to move the vehicle in the lateral direction to park the vehicle onto the parking surface.

In an embodiment, when the parking surface is available for parking in the longitudinal direction, the processor may check whether an angle of a longitudinal direction of the vehicle is identical to an angle of a longitudinal direction of the parking surface or an angle of a long side of a rectangle that marks the parking surface.

In an embodiment, when the angle of the longitudinal direction of the vehicle is not identical to the angle of the longitudinal direction of the parking surface or the angle of the long side of the rectangle that marks the parking surface, the processor may control the front-wheel drive module and the rear-wheel drive module in opposite directions to each other to rotate the vehicle such that the angle of the longitudinal direction of the parking surface and the angle of the longitudinal direction of the vehicle are identical.

In an embodiment, when the angle of the longitudinal direction of the vehicle becomes identical to the angle of the longitudinal direction of the parking surface or the angle of the long side of the rectangle that marks the parking surface, the processor may simultaneously control the front-wheel drive module and the rear-wheel drive module in the CRAB mode to move the vehicle in the lateral direction within a range in which the vehicle is able to enter the parking surface, and then to move the vehicle in the longitudinal direction onto the parking surface to park the vehicle.

There is provided a method of controlling a four-wheel independent steering vehicle according to another aspect of the present disclosure, the method may include: detecting, by a processor, an angle of a longitudinal direction of a parking surface and an angle of a longitudinal direction of a vehicle through a sensor module upon parking using a CRAB mode of the four-wheel independent steering vehicle; and performing, by the processor, the parking through selective control of a front-wheel drive module and a rear-wheel drive module, on the basis of information detected through the sensor module, in consideration of at least one of an angle between the vehicle and the parking surface, a position and shape of the parking surface, and a direction of the vehicle entering the parking surface.

According to one aspect of the present disclosure, a traveling mode in a lateral direction (or CRAB mode) is separately controlled on each steering apparatus of the four-wheel independent steering vehicle to allow a vehicle to automatically perform safe and fast parking in various parking situations.

## BRIEF DESCRIPTION OF THE DRAWINGS

FIG. 1 is an exemplified view for describing an ideal parking method using a CRAB mode of a four-wheel independent steering vehicle.
FIG. 2 is an exemplified view for describing a parking situation in which an ideal parking is unable to be performed using the CRAB mode of the four-wheel independent steering vehicle.
FIG. 3 is an exemplified view illustrating a schematic configuration of an apparatus for controlling a four-wheel independent steering vehicle according to one embodiment of the present disclosure.
FIG. 4 is a flowchart for exemplarily describing a method of controlling the four-wheel independent steering vehicle according to one embodiment of the present disclosure.
FIG. 5 is an exemplified view for describing an operation of performing parking in a lateral direction by separately controlling the CRAB mode of each steering apparatus of the four-wheel independent steering vehicle in FIG. 4.
FIG. 6 is an exemplified view for describing an operation of performing parking in a longitudinal direction by separately controlling the CRAB mode of each steering apparatus of the four-wheel independent steering vehicle in FIG. 4.
FIG. 7 is an exemplified view illustrated for describing an operation of displaying a target steering angle and a target steering trajectory on an around view screen during parking in the CRAB mode in FIG. 4.
FIGS. 8 to 11 are exemplified views for describing a method of calculating a target point for each front and rear wheel during parking in the lateral direction, in FIG. 5.

## DETAILED DESCRIPTION OF THE ILLUSTRATED EMBODIMENTS

The components described in the example embodiments may be implemented by hardware components including, for example, at least one digital signal processor (DSP), a processor, a controller, an application-specific integrated circuit (ASIC), a programmable logic element, such as an FPGA, other electronic devices, or combinations thereof. At least some of the functions or the processes described in the example embodiments may be implemented by software, and the software may be recorded on a recording medium.

The components, the functions, and the processes described in the example embodiments may be implemented by a combination of hardware and software.

The method according to example embodiments may be embodied as a program that is executable by a computer, and may be implemented as various recording media such as a magnetic storage medium, an optical reading medium, and a digital storage medium.

Various techniques described herein may be implemented as digital electronic circuitry, or as computer hardware, firmware, software, or combinations thereof. The techniques may be implemented as a computer program product, i.e., a computer program tangibly embodied in an information carrier, e.g., in a machine-readable storage device (for example, a computer-readable medium) or in a propagated signal for processing by, or to control an operation of a data processing apparatus, e.g., a programmable processor, a computer, or multiple computers. A computer program(s) may be written in any form of a programming language, including compiled or interpreted languages and may be deployed in any form including a stand-alone program or a module, a component, a subroutine, or other units suitable for use in a computing environment. A computer program may be deployed to be executed on one computer or on multiple computers at one site or distributed across multiple sites and interconnected by a communication network.

Processors suitable for execution of a computer program include, by way of example, both general and special purpose microprocessors, and any one or more processors of any kind of digital computer. Generally, a processor will receive instructions and data from a read-only memory or a random access memory or both. Elements of a computer may include at least one processor to execute instructions and one or more memory devices to store instructions and data. Generally, a computer will also include or be coupled to receive data from, transfer data to, or perform both on one or more mass storage devices to store data, e.g., magnetic, magneto-optical disks, or optical disks. Examples of information carriers suitable for embodying computer program instructions and data include semiconductor memory devices, for example, magnetic media such as a hard disk, a floppy disk, and a magnetic tape, optical media such as a compact disk read only memory (CD-ROM), a digital video disk (DVD), etc. and magneto-optical media such as a floptical disk, and a read only memory (ROM), a random access memory (RAM), a flash memory, an erasable programmable ROM (EPROM), and an electrically erasable programmable ROM (EEPROM) and any other known computer readable medium. A processor and a memory may be supplemented by, or integrated into, a special purpose logic circuit.

The processor may run an operating system (OS) and one or more software applications that run on the OS. The processor device also may access, store, manipulate, process, and create data in response to execution of the software. For purpose of simplicity, the description of a processor device is used as singular; however, one skilled in the art will be appreciated that a processor device may include multiple processing elements and/or multiple types of processing elements. For example, a processor device may include multiple processors or a processor and a controller. In addition, different processing configurations are possible, such as parallel processors.

Also, non-transitory computer-readable media may be any available media that may be accessed by a computer, and may include both computer storage media and transmission media.

The present specification includes details of a number of specific implements, but it should be understood that the details do not limit any invention or what is claimable in the specification but rather describe features of the specific example embodiment. Features described in the specification in the context of individual example embodiments may be implemented as a combination in a single example embodiment. In contrast, various features described in the specification in the context of a single example embodiment may be implemented in multiple example embodiments individually or in an appropriate sub-combination. Furthermore, the features may operate in a specific combination and may be initially described as claimed in the combination, but one or more features may be excluded from the claimed combination in some cases, and the claimed combination may be changed into a sub-combination or a modification of a sub-combination.

Similarly, even though operations are described in a specific order on the drawings, it should not be understood as the operations needing to be performed in the specific order or in sequence to obtain desired results or as all the operations needing to be performed. In a specific case, multitasking and parallel processing may be advantageous. In addition, it should not be understood as requiring a separation of various apparatus components in the above described example embodiments in all example embodiments, and it should be understood that the above-described program components and apparatuses may be incorporated into a single software product or may be packaged in multiple software products.

It should be understood that the example embodiments disclosed herein are merely illustrative and are not intended to limit the scope of the invention as set out in the appended claims.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, embodiments that include other components in addition to the components described in the various embodiments are also included in the scope of the present disclosure.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, when a component is referred to as being "linked," "coupled," or "connected" to another component, it is understood that not only a direct connection relationship but also an indirect connection relationship through an intermediate component may also be included. In addition, when a component is referred to as "comprising" or "having" another component, it may mean further inclusion of another component not the exclusion thereof, unless explicitly described to the contrary.

In the present disclosure, the terms first, second, etc. are used only for the purpose of distinguishing one component from another, and do not limit the order or importance of components, etc., unless specifically stated otherwise. Thus, within the scope of this disclosure, a first component in one exemplary embodiment may be referred to as a second component in another embodiment, and similarly a second component in one exemplary embodiment may be referred to as a first component.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. In addition, exemplary embodiments that include other components in addition to the components described in the various embodiments are also included in the scope of the present disclosure.

Hereinafter, an apparatus and method for controlling a four-wheel independent steering vehicle will be described below with reference to the accompanying drawings through various exemplary embodiments.

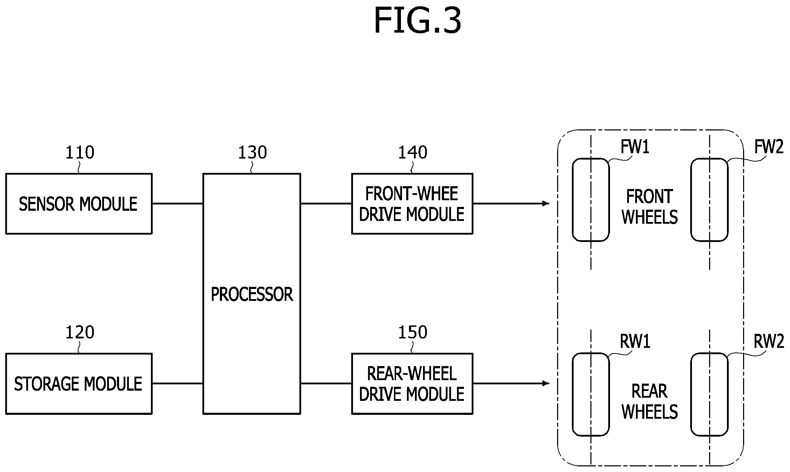

FIG. 3 is an exemplified view illustrating a schematic configuration of an apparatus for controlling a four-wheel independent steering vehicle according to one embodiment of the present disclosure.

As illustrated in FIG. 3, an apparatus for controlling a four-wheel independent steering vehicle according to the present embodiment includes a sensor module 110, a storage module 120, a processor 130, a front-wheel drive module 140, and a rear-wheel drive module 150.

The sensor module 110 may include a current sensor (that is, a current detection sensor) and a steering angle sensor (that is, a steering angle detection sensor).

In addition, the sensor module 110 may include a camera (image sensor) to check a parking surface (parking space).

In addition, the sensor module 110 may include an ultrasonic sensor or an infrared sensor to measure a distance (or length).

In addition, the sensor module 110 may include wheel speed sensors included in the front and rear wheels, respectively, and an acceleration sensor to detect the acceleration of the vehicle.

The processor 130 may measure steering angle speed using the steering angle sensor.

In addition, the processor 130 may control the steering angles of the front and rear wheels.

The storage module 120 may store an algorithm for the processor 130 to control the steering angles of the front and rear wheels, and an algorithm for the processor 130 to separately control a traveling mode in a lateral direction (or CRAB mode) on each steering apparatus of the four-wheel independent steering vehicle for safe and fast parking in various parking situations.

In this case, the storage module 120 and the processor 130 may each be implemented as a separate chip, or as a single chip that includes the storage module 120 inside the processor 130.

The storage module 120 may be implemented as at least one of non-volatile memory elements such as a cache, a read-only memory (ROM), a programmable ROM (PROM), an erasable programmable ROM (EPROM), an electrically erasable programmable ROM (EEPROM), and a flash memory, volatile memory elements such as a random access memory (RAM), or storage media such as a hard disc drive (HDD) and a CD-ROM, but is not limited thereto.

In addition, the processor 130 may be implemented as an electronic control unit (ECU) that controls the traveling of the vehicle.

The front-wheel drive module 140 is connected to front wheels FW1 and FW2 and may drive an actuator of the front wheels FW1 and FW2 (e.g., an actuator that adjusts a direction of rotation, rotational speed, and steering angle of the front wheels, by a motor or hydraulic pressure), respectively, according to control of the processor 130.

The front-wheel drive module 140 may be included in the processor 130.

The rear-wheel drive module 150 is connected to rear wheels RW1 and RW2 and may drive an actuator of the rear wheels RW1 and RW2 (e.g., an actuator that adjusts a direction of rotation, rotational speed, and steering angle of the rear wheels, by a motor or hydraulic pressure), respectively, according to control of the processor 130.

The rear-wheel drive module 150 may be included in the processor 130.

The processor 130 controls the front-wheel drive module 140 and the rear-wheel drive module 150 to control the steering angles of the front and rear wheels to be identical to each other, or to be different from each other.

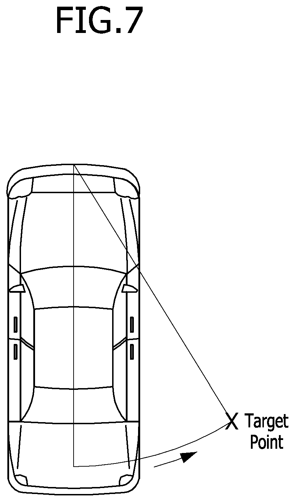

The processor 130 may display a target steering angle and a target steering trajectory on an around view screen during parking in a CRAB mode (see FIG. 7).

Hereinafter, a specific operation of the processor 130 will be described.

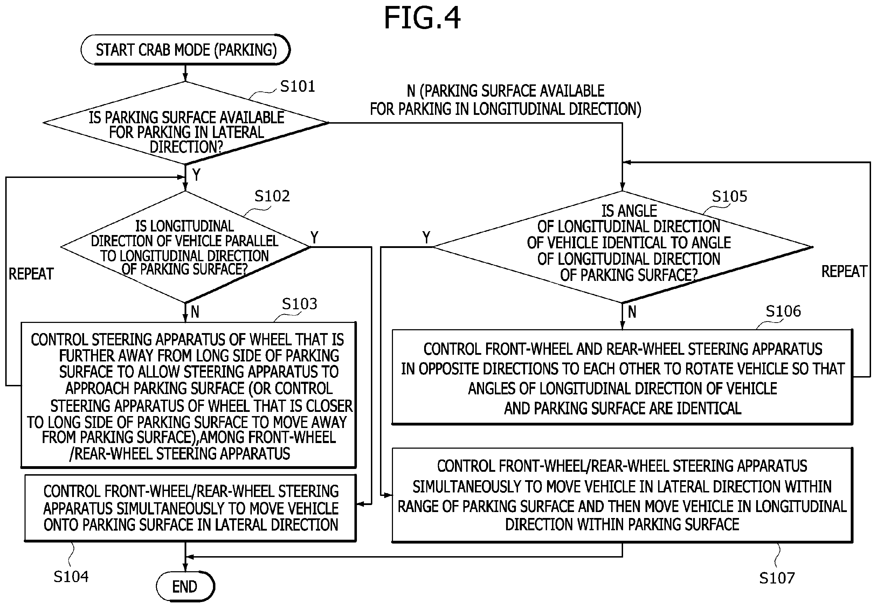

FIG. 4 is a flowchart for exemplarily describing a method of controlling the four-wheel independent steering vehicle according to one embodiment of the present disclosure, and a flowchart for describing a method of separately controlling the CRAB mode for each steering apparatus of the four-wheel independent steering vehicle, such that safe and fast parking may be automatically performed in various parking situations.

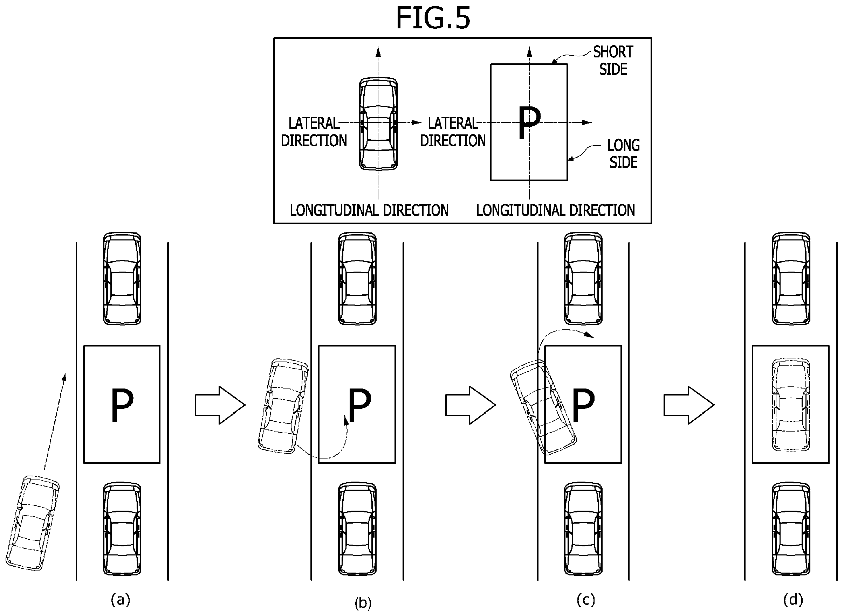

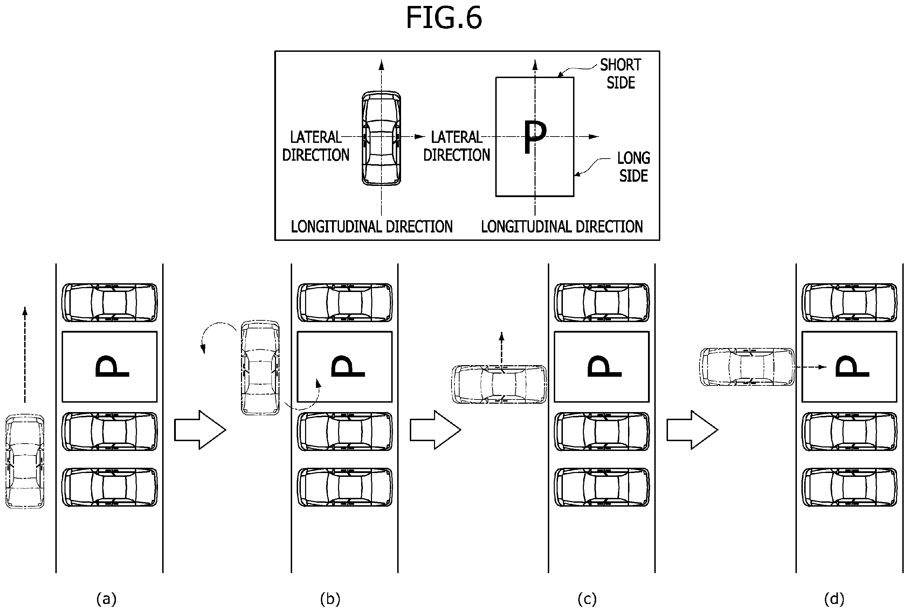

FIG. 5 is an exemplified view for describing an operation of performing parking in a lateral direction by separately controlling the CRAB mode of each steering apparatus of the four-wheel independent steering vehicle in FIG. 4, and FIG. 6 is an exemplified view for describing an operation of performing parking in a longitudinal direction by separately controlling the CRAB mode of each steering apparatus of the four-wheel independent steering vehicle in FIG. 4.

With reference to FIG. 4, when initiating the parking in the CRAB mode, the processor 130 checks whether a parking surface (or parking space) is available for parking in the lateral direction (or longitudinal direction) (S101).

For example, when there is a parking space available, the processor 130 may check, on the basis of information on the parking surface (or parking space) measured through the sensor module 110, whether a length of the parking surface (or parking space) is greater than a length of the vehicle (that is, parking in the lateral direction is possible) or whether the length of the parking surface (or parking space) is less than the length of the vehicle but greater than a width of the vehicle (that is, parking in the longitudinal direction is possible).

When the parking surface (or parking space) is available for the parking in the lateral direction as a result of the checking in S101 (Yes in S101), the processor 130 checks whether a longitudinal direction of the vehicle is parallel to a longitudinal direction of the parking surface (or a long side of a rectangle that marks the parking surface) (S102).

When the longitudinal direction of the vehicle is not parallel to the longitudinal direction of the parking surface (No in S102) as a result of the checking in S102 (see FIG. 5A), the processor 130 controls a steering apparatus (i.e., drive module) of a wheel that is further away from the long side of the parking surface to approach the parking surface, among the front-wheel/rear-wheel steering apparatuses (i.e., front-wheel drive module 140, or rear-wheel drive module 150) (S103).

For example, with reference to FIG. 5B, since the wheel that is further away from the long side of the parking surface is the rear wheel, the processor 130 may control the rear-wheel drive module 150 to allow a rear wheel portion to approach the parking surface in order to ensure that the longitudinal direction of the vehicle is parallel to the longitudinal direction of the parking surface. In addition, with reference to FIG. 5C, since the wheel that is further away from the long side of the parking surface is the front wheel, the processor 130 may control the front-wheel drive module 140 to allow a front wheel portion to approach the parking surface in order to ensure that the longitudinal direction of the vehicle is parallel to the longitudinal direction of the parking surface.

Meanwhile, although not illustrated in the drawings, a steering apparatus (that is, drive module) of a wheel that is closer to the long side of the parking surface may be controlled to move away from the parking surface. For example, with reference to FIG. 5B, since the wheel that is closer to the long side of the parking surface is the front wheel, the processor 130 may control the front-wheel drive module 140 to allow the front wheel portion to move away from the parking surface in order to ensure that the longitudinal direction of the vehicle is parallel to the longitudinal direction of the parking surface. In addition, with reference to FIG. 5C, since the wheel that is closer to the long side of the parking surface is the rear wheel, the processor 130 may control the rear-wheel drive module 140 to allow the rear wheel portion to move away from the parking surface in order to ensure that the longitudinal direction of the vehicle is parallel to the longitudinal direction of the parking surface.

In this case, the processes S102 and S103 that allow the longitudinal direction of the vehicle to be parallel to the longitudinal direction of the parking surface may be repeated by controlling one of the front-wheel/rear-wheel steering apparatus (that is, the front-wheel drive module 140, or the rear-wheel drive module 150).

Accordingly, when the longitudinal direction of the vehicle is parallel to the longitudinal direction of the parking surface (Yes in S102), the processor 130 may simultaneously control the front-wheel/rear-wheel steering apparatuses (that is, the front-wheel drive module 140, or the rear-wheel drive module 150) to move the vehicle in the lateral direction onto the parking surface to park the vehicle (S104) (see FIG. 5D).

That is, as described above in FIG. 1, the parking in the lateral direction is made possible with the ideal parking method using the CRAB mode of the four-wheel independent steering vehicle.

Meanwhile, when the parking surface (or parking space) is available for the parking in the longitudinal direction as the result of the checking in S101 (No in S101), the processor 130 checks whether an angle of the longitudinal direction of the vehicle is identical to the longitudinal direction of the parking surface (or an angle of the long side of the rectangle that marks the parking surface) within a specified error range (S105).

When the angle of the longitudinal direction of the vehicle is not identical to the longitudinal direction of the parking surface (or the angle of the long side of the rectangle that marks the parking surface) within the specified error range as the result of the checking in S102 (No in S105) (see FIG. 6A), the processor 130 controls the front-wheel/rear-wheel steering apparatus (that is, the front-wheel drive module 140, or the rear-wheel drive module 150) in opposite directions to each other to rotate the vehicle so that the angle of the longitudinal direction of the parking surface and the angle of the longitudinal direction of the vehicle are identical within the specified error range (S106).

For example, with reference to FIG. 6B, the front wheels of the vehicle are controlled in a direction away from the long side of the parking surface (e.g., to the left) and the rear wheels of the vehicle are controlled in a direction closer to the long side of the parking surface (e.g., to the right) to rotate the vehicle. In this case, the direction of rotation is not limited, and the front wheels and rear wheels of the vehicle may be controlled in opposite directions.

In this case, the front-wheel/rear-wheel steering apparatus (that is, the front-wheel drive module 140 or the rear-wheel drive module 150) may be controlled in opposite directions to each other, and the process S105 and S106 of rotating the vehicle may be repeated such that the angle of the longitudinal direction of the parking surface and the angle of the longitudinal direction of the vehicle are identical within the specified error range.

Accordingly, when the angle of the longitudinal direction of the parking surface and the angle of the longitudinal direction of the vehicle become identical within the specified error range (Yes in S105), the processor 130 may simultaneously control the front-wheel/-rear-wheel steering apparatus (that is, the front-wheel drive module 140, or the rear-wheel drive module 150) to move the vehicle in the lateral direction within the range of the parking surface (see FIG. 6C), and then move the vehicle in the longitudinal direction onto the parking surface to park the vehicle (S107) (see FIG. 6D).

For reference, in the present embodiment, the angle of the longitudinal direction of the parking surface being identical to the longitudinal angle of the vehicle within the specified error range means that only the angle of the longitudinal direction is identical before the vehicle is parked onto the parking surface. Therefore, in order to park the vehicle onto the parking surface, an operation is required to move the vehicle in the lateral direction within the range of the parking surface without interference from surrounding obstacles (see FIG. 6C).

FIG. 7 is an exemplified view illustrated for describing an operation of displaying a target steering angle and a target steering trajectory on an around view screen during parking in the CRAB mode in FIG. 4.

The processor 130 may recognize and calculate a distance to a surrounding structure on the basis of information measured through the sensor module 110, and output an around view screen through a display apparatus (not illustrated) provided in the vehicle, and may calculate and display the distance to the surrounding structure and other target control values required for parking (e.g., a target steering angle of the front or rear wheels, a target steering trajectory of the front or rear wheels, and the like) through the around view screen, and may display whether parking is possible or impossible from results of the calculation.

In addition, the processor 130 recognizes the vehicle and a surrounding environment in real time while displaying the target steering angle and the target steering trajectory on the around view screen, thereby supporting intuitive and easy operation (parking), and guiding the process of performing a parking operation to a user so that the user may have a sense of convenience and stability.

Therefore, the processor 130 may output guidance information through the around view screen to support the parking assistance function and guide whether the parking assistance function is supported (that is, whether the vehicle needs to be parked manually), guidance on a target point and course, whether there are interference with the surrounding structures and safety results, and the like.

The processor 130 may control acceleration and deceleration pedals using the assistance function to support driving (parking) when a driver is present, and may support calculating a target point on each wheel (that is, the front and rear wheels) and automatic control functions for deceleration and acceleration in the case of unmanned parking.

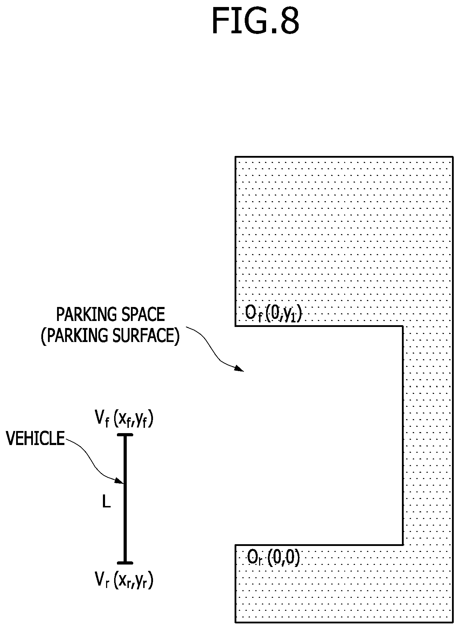

FIGS. 8 to 11 are exemplified views for describing a method of calculating a target point for each front and rear wheel during parking in the lateral direction, in FIG. 5. However, this calculation method is illustrative and is not intended to be limited.

In FIG. 8, the processor 130 checks whether $y_r < 0 + l_s$ is satisfied.

Here, $V_f(x_f, y_f)$ is a coordinate of a front wheel, $V_r(x_r, y_r)$ is a coordinate of a rear wheel, $l_s$ is a safety distance to be calculated as 0.5, and $L$ means a length of a vehicle, and based on which, the processor 130 checks whether there is interference in traveling for parking in the lateral direction (that is, parallel parking), and activates cooperative control of driving and braking when $l_s$ (safety distance) is 0.5 or less.

In addition, the processor 130 checks whether

$$\sqrt{x_f^2 + y_f^2} > C_s L$$ is satisfied.

$C_s$ is a safety factor, which is calculated to be 1.2, and the processor 130 calculates an interference distance between a front portion $V_f$ of the vehicle and a structure $(O_f, O_r)$, and checks whether the distance is equal to or greater than a value made by multiplying a wheelbase of the vehicle and the safety factor.

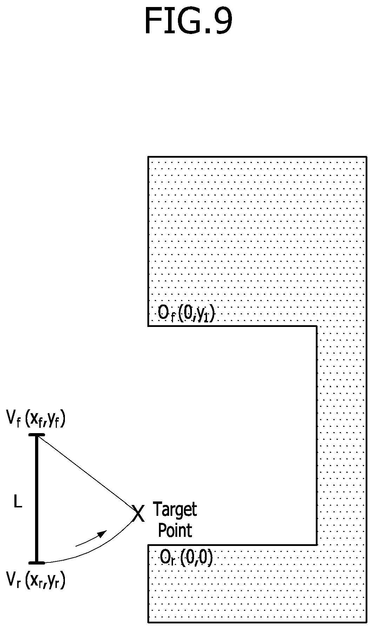

With reference to FIG. 9, the processor 130 calculates a target point $(y_{r,t})$ for the rear wheel.

Here, $y_{r,t} = \dfrac{y_1 - L}{2}$

The processor 130 displays the target point on the around view screen, and in the CRAB mode, all four wheels may maintain an angle of 90 degrees. However, the processor 130 may generate an additional steering motion through the drive, and perform cooperative control of the drive and steering. In addition, the processor 130 may move (change) the target point to correspond to the driver's acceleration/deceleration operations.

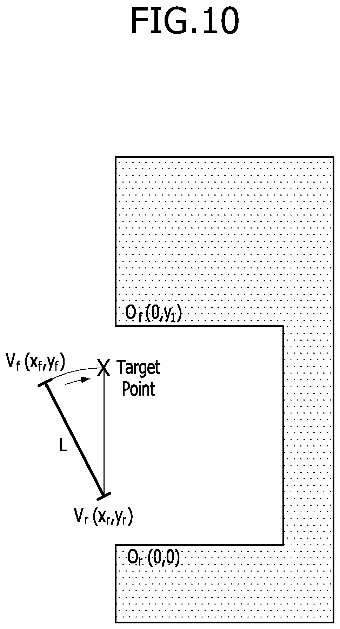

With reference to FIG. 10, the processor 130 performs calculating and checking the interference distance between the rear portion $V_r$ of the vehicle and the structure $(O_f, O_r)$.

The processor 130 checks whether

$$\sqrt{x_r^2 + (y_r - y_1)^2} > C_s L$$

The processor 130 calculates a target point $(y_{f,t})$ for the front wheel based on the current reference of $y_r$.

Here, $y_{f,t} = y_r + L$

The processor 130 displays the target point on the around view screen, and in the CRAB mode, all four wheels may maintain an angle of 90 degrees. However, the processor 130 may generate an additional steering motion through the drive, and perform cooperative control of the drive and steering. In addition, the processor 130 may move (change) the target point to correspond to the driver's acceleration/deceleration operations.

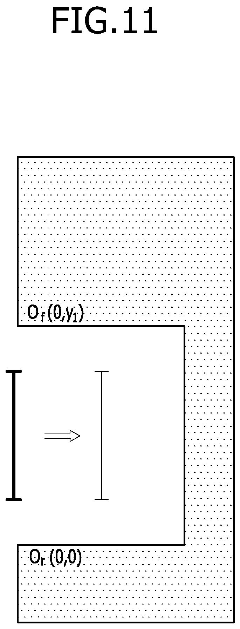

With reference to FIG. 11, the processor 130 may assist the driver's acceleration/deceleration operations or automatically move the vehicle in the lateral direction to park in the parking space (parking surface).

As described above, the present disclosure may separately control a traveling mode in a lateral direction (or CRAB mode) on each steering apparatus of the four-wheel independent steering vehicle to assist the driver's acceleration and deceleration operations in various parking situations, or to allow the vehicle to automatically perform safe and fast parking.

**Claims**

1. An apparatus for controlling a four-wheel independent steering vehicle, the apparatus comprising:

   a sensor module (110); and
   a processor (130) configured to perform parking through selective control of a front-wheel (FW1, FW2) drive module (140) and a rear-wheel (RW1, RW2) drive module (150) in consideration of at least one of an angle between the vehicle and a parking surface, a position and shape of the parking surface, and a direction of the vehicle entering the parking surface, on the basis of information detected through the sensor module, upon parking using a CRAB mode of the four-wheel independent steering vehicle,
   wherein the processor is configured to check whether the parking surface is available for parking in a lateral direction or a longitudinal direction on the basis of the information detected through the sensor module,
   wherein the processor is configured to check whether a longitudinal direction of the vehicle is parallel to a longitudinal direction of the parking surface or a long side of a rectangle that marks the parking surface, when the parking surface is available for parking in the lateral direction; and
   **characterized in that**:

      - when the longitudinal direction of the vehicle is not parallel to the longitudinal direction of the parking surface, the processor is configured to control a drive module that drives a wheel that is further away from the long side of the parking surface, among the front-wheel drive module and the rear-wheel drive module, according to a specified setting, to allow the drive module to approach the parking surface so that the longitudinal direction of the vehicle becomes parallel to the longitudinal direction of the parking surface;

or

- wherein, when the longitudinal direction of the vehicle is not parallel to the longitudinal direction of the parking surface, the processor is configured to control the drive module (140, 150) that drives a wheel that is closer to the long side of the parking surface, among the front-wheel drive module and the rear-wheel drive module, according to a specified setting, to allow the drive module to move away from the parking surface so that the longitudinal direction of the vehicle becomes parallel to the longitudinal direction of the parking surface.

2. The apparatus of claim 1, wherein the processor is configured to simultaneously control the front-wheel drive module and the rear-wheel drive module in the CRAB mode, when the longitudinal direction of the vehicle is parallel to the longitudinal direction of the parking surface, to move the vehicle in the lateral direction to park the vehicle onto the parking surface.

3. The apparatus of claim 1 or 2, wherein, when the parking surface is available for parking in the longitudinal direction, the processor is configured to check whether an angle of a longitudinal direction of the vehicle is identical to an angle of a longitudinal direction of the parking surface or an angle of a long side of a rectangle that marks the parking surface.

4. The apparatus of claim 3, wherein, when the angle of the longitudinal direction of the vehicle is not identical to the angle of the longitudinal direction of the parking surface or the angle of the long side of the rectangle that marks the parking surface, the processor is configured to control the front-wheel drive module and the rear-wheel drive module in opposite directions to each other to rotate the vehicle such that the angle of the longitudinal direction of the parking surface and the angle of the longitudinal direction of the vehicle are identical.

5. The apparatus of claim 4, wherein, when the angle of the longitudinal direction of the vehicle becomes identical to the angle of the longitudinal direction of the parking surface or the angle of the long side of the rectangle that marks the parking surface, the processor is configured to simultaneously control the front-wheel drive module and the rear-wheel drive module in the CRAB mode to move the vehicle in the lateral direction within a range in which the vehicle is able to enter the parking surface, and then to move the vehicle in the longitudinal direction onto the parking surface to park the vehicle.

6. A method of controlling a four-wheel independent steering vehicle, the method comprising:

detecting (S102, S105), by a processor (130), an angle of a longitudinal direction of a parking surface and an angle of a longitudinal direction of a vehicle through a sensor module (120) upon parking using a CRAB mode of the four-wheel independent steering vehicle;

performing (S103, S104, S106, S107), by the processor, the parking through selective control of a front-wheel drive module and a rear-wheel drive module, on the basis of information detected through the sensor module, in consideration of at least one of an angle between the vehicle and the parking surface, a position and shape of the parking surface, and a direction of the vehicle entering the parking surface;

checking whether the parking surface is available for parking in a lateral direction or a longitudinal direction on the basis of the information detected through the sensor module; and

checking whether a longitudinal direction of the vehicle is parallel to a longitudinal direction of the parking surface or a long side of a rectangle that marks the parking surface, when the parking surface is available for parking in the lateral direction;

**characterized in that**:

- when the longitudinal direction of the vehicle is not parallel to the longitudinal direction of the parking surface, controlling a drive module that drives a wheel that is further away from the long side of the parking surface, among the front-wheel drive module and the rear-wheel drive module, according to a specified setting, to allow the drive module to approach the parking surface so that the longitudinal direction of the vehicle becomes parallel to the longitudinal direction of the parking surface;

or

- when the longitudinal direction of the vehicle is not parallel to the longitudinal direction of the parking surface, controlling a drive module that drives a wheel that is closer to the long side of the parking surface, among the front-wheel drive module and the rear-wheel drive module, according to a specified setting, to allow the drive module to move away from the parking surface so that the longitudinal direction of the vehicle becomes parallel to the longitudinal direction of the parking surface.

**Patentansprüche**

1.  Vorrichtung zur Steuerung eines Fahrzeugs mit unabhängiger Vierradlenkung, wobei die Vorrichtung Folgendes umfasst:

    ein Sensormodul (110); und
    einen Prozessor (130), der dazu eingerichtet ist, ein Einparken mittels selektiver Steuerung eines Vorderrad- (FW1, FW2) Antriebsmoduls (140) und eines Hinterrad- (RW1, RW2) Antriebsmoduls (150) unter Berücksichtigung von mindestens einem aus einem Winkel zwischen dem Fahrzeug und einer Parkfläche, einer Position und Form der Parkfläche und einer Richtung des auf die Parkfläche einfahrenden Fahrzeugs auf der Grundlage von durch das Sensormodul erfassten Informationen beim Einparken unter Verwendung eines CRAB-Modus des Fahrzeugs mit unabhängiger Vierradlenkung durchzuführen,
    wobei der Prozessor dazu eingerichtet ist, auf der Grundlage der durch das Sensormodul erfassten Informationen zu prüfen, ob die Parkfläche für das Einparken in einer Querrichtung oder einer Längsrichtung verfügbar ist,
    wobei der Prozessor dazu eingerichtet ist, zu prüfen, ob eine Längsrichtung des Fahrzeugs parallel zu einer Längsrichtung der Parkfläche oder einer Längsseite eines Rechtecks, das die Parkfläche markiert, verläuft, wenn die Parkfläche für das Einparken in der Querrichtung verfügbar ist; und
    **dadurch gekennzeichnet, dass**:

    wenn die Längsrichtung des Fahrzeugs nicht parallel zur Längsrichtung der Parkfläche verläuft, der Prozessor dazu eingerichtet ist, ein Antriebsmodul, das ein Rad antreibt, das weiter von der Längsseite der Parkfläche entfernt ist, aus dem Vorderradantriebsmodul und dem Hinterradantriebsmodul, gemäß einer spezifizierten Einstellung so zu steuern, dass ermöglicht wird, dass sich das Antriebsmodul der Parkfläche nähert, sodass die Längsrichtung des Fahrzeugs parallel zur Längsrichtung der Parkfläche wird; oder
    wenn die Längsrichtung des Fahrzeugs nicht parallel zur Längsrichtung der Parkfläche verläuft, der Prozessor dazu eingerichtet ist, das Antriebsmodul (140, 150), das ein Rad antreibt, das sich näher an der Längsseite der Parkfläche befindet, aus dem Vorderradantriebsmodul und dem Hinterradantriebsmodul, gemäß einer spezifizierten Einstellung so zu steuern, dass ermöglicht wird, dass sich das Antriebsmodul von der Parkfläche wegbewegt, sodass die Längsrichtung des Fahrzeugs parallel zur Längsrichtung der Parkfläche wird.

2.  Vorrichtung nach Anspruch 1, wobei der Prozessor dazu eingerichtet ist, das Vorderradantriebsmodul und das Hinterradantriebsmodul im CRAB-Modus gleichzeitig zu steuern, wenn die Längsrichtung des Fahrzeugs parallel zur Längsrichtung der Parkfläche verläuft, um das Fahrzeug in der Querrichtung zu bewegen, um das Fahrzeug auf die Parkfläche einzuparken.

3.  Vorrichtung nach Anspruch 1 oder 2, wobei der Prozessor, wenn die Parkfläche für das Einparken in der Längsrichtung verfügbar ist, dazu eingerichtet ist, zu prüfen, ob ein Winkel einer Längsrichtung des Fahrzeugs identisch mit einem Winkel einer Längsrichtung der Parkfläche oder einem Winkel einer Längsseite eines Rechtecks, das die Parkfläche markiert, ist.

4.  Vorrichtung nach Anspruch 3, wobei, wenn der Winkel der Längsrichtung des Fahrzeugs nicht identisch mit dem Winkel der Längsrichtung der Parkfläche oder dem Winkel der Längsseite des Rechtecks, das die Parkfläche markiert, ist, der Prozessor dazu eingerichtet ist, das Vorderradantriebsmodul und das Hinterradantriebsmodul in zueinander entgegengesetzte Richtungen zu steuern, um das Fahrzeug derart zu drehen, dass der Winkel der Längsrichtung der Parkfläche und der Winkel der Längsrichtung des Fahrzeugs identisch sind.

5.  Vorrichtung nach Anspruch 4, wobei, wenn der Winkel der Längsrichtung des Fahrzeugs identisch mit dem Winkel der Längsrichtung der Parkfläche oder dem Winkel der Längsseite des Rechtecks, das die Parkfläche markiert, wird, der Prozessor dazu eingerichtet ist, das Vorderradantriebsmodul und das Hinterradantriebsmodul im CRAB-Modus gleichzeitig zu steuern, um das Fahrzeug in der Querrichtung innerhalb eines Bereichs zu bewegen, in dem das Fahrzeug auf die Parkfläche einfahren kann, und dann das Fahrzeug in der Längsrichtung auf die Parkfläche zu bewegen, um das Fahrzeug einzuparken.

6.  Verfahren zur Steuerung eines Fahrzeugs mit unabhängiger Vierradlenkung, wobei das Verfahren Folgendes umfasst:

    Erfassen (S102, S105), durch einen Prozessor (130), eines Winkels einer Längsrichtung einer Parkfläche und eines Winkels einer Längsrichtung eines Fahrzeugs durch ein Sensormodul (120) beim Einparken unter Verwendung eines CRAB-Modus des Fahrzeugs mit unabhängiger Vierradlenkung;
Durchführen (S103, S104, S106, S107) des Einparkens durch den Prozessor mittels selektiver Steuerung eines Vorderradantriebsmoduls und eines Hinterradantriebsmoduls auf der Grundlage von durch das Sensormodul erfassten Informationen unter Berücksichtigung von mindestens einem aus einem Winkel zwischen dem Fahrzeug und der Parkfläche, einer Position und Form der Parkfläche und einer Richtung des auf die Parkfläche einfahrenden Fahrzeugs; Prüfen auf der Grundlage der durch das Sensormodul erfassten Informationen, ob die Parkfläche für das Einparken in einer Querrichtung oder einer Längsrichtung verfügbar ist; und Prüfen, ob eine Längsrichtung des Fahrzeugs parallel zu einer Längsrichtung der Parkfläche oder einer Längsseite eines Rechtecks, das die Parkfläche markiert, verläuft, wenn die Parkfläche für das Einparken in der Querrichtung verfügbar ist;

**gekennzeichnet durch**:

wenn die Längsrichtung des Fahrzeugs nicht parallel zur Längsrichtung der Parkfläche verläuft, Steuern eines Antriebsmoduls, das ein Rad antreibt, das weiter von der Längsseite der Parkfläche entfernt ist, aus dem Vorderradantriebsmodul und dem Hinterradantriebsmodul, gemäß einer spezifizierten Einstellung, sodass ermöglicht wird, dass sich das Antriebsmodul der Parkfläche nähert, sodass die Längsrichtung des Fahrzeugs parallel zur Längsrichtung der Parkfläche wird; oder wenn die Längsrichtung des Fahrzeugs nicht parallel zur Längsrichtung der Parkfläche verläuft, Steuern eines Antriebsmoduls, das ein Rad antreibt, das sich näher an der Längsseite der Parkfläche befindet, aus dem Vorderradantriebsmodul und dem Hinterradantriebsmodul, gemäß einer spezifizierten Einstellung, sodass ermöglicht wird, dass sich das Antriebsmodul von der Parkfläche wegbewegt, sodass die Längsrichtung des Fahrzeugs parallel zur Längsrichtung der Parkfläche wird.

**Revendications**

1. Appareil de commande d'un système à quatre roues directrices indépendantes, l'appareil comprenant:

un module de capteur (110); et
un processeur (130) configuré pour effectuer un stationnement par le biais d'une commande sélective d'un module d'entraînement des roues avant (FW1, FW2) et d'un module d'entraînement des roues arrière (RW1, RW2) (150), en tenant compte d'au moins l'un parmi un angle entre le véhicule et une surface de stationnement, une position et une forme de la surface de stationnement, et une direction d'entrée du véhicule sur la surface de stationnement, sur la base d'informations détectées par le module de capteur, lors du stationnement en utilisant un mode CRAB du véhicule à quatre roues directrices indépendantes,
dans lequel le processeur est configuré pour vérifier si la place de stationnement est disponible pour le stationnement dans le sens latéral ou dans le sens longitudinal, sur la base des informations détectées par le module de capteur,
dans lequel le processeur est configuré pour vérifier si la direction longitudinale du véhicule est parallèle à la direction longitudinale de la surface de stationnement ou à un grand côté d'un rectangle qui délimite la surface de stationnement, lorsque la surface de stationnement est disponible pour le stationnement dans le sens latéral; et

**caractérisé en ce que**:

- lorsque la direction longitudinale du véhicule n'est pas parallèle à la direction longitudinale de la surface de stationnement, le processeur est configuré pour commander un module d'entraînement qui entraîne la roue la plus éloignée du grand côté de la surface de stationnement, parmi le module d'entraînement des roues avant et le module d'entraînement des roues arrière, conformément à un réglage spécifié, afin de permettre au module d'entraînement de se rapprocher de la surface de stationnement de manière à ce que la direction longitudinale du véhicule devienne parallèle à la direction longitudinale de la surface de stationnement;
ou
- dans lequel, lorsque la direction longitudinale du véhicule n'est pas parallèle à la direction longitudinale de la surface de stationnement, le processeur est configuré pour commander le module d'entraînement (140, 150) qui entraîne une roue située le plus près du grand côté de la surface de stationnement, parmi le module d'entraînement des roues avant et le module d'entraînement des roues arrière, conformément à un réglage spécifié, afin de permettre au module d'entraînement de s'éloigner de la surface de stationnement de sorte que la direction longitudinale du véhicule devienne parallèle à la direction longitudinale de la surface de stationnement.

2. Appareil selon la revendication 1, dans lequel le processeur est configuré pour commander simultanément le module d'entraînement des roues avant et le module d'entraînement des roues arrière en mode CRAB, lorsque la direction longitudinale du véhicule est parallèle à la direction longitudinale de la surface de stationnement, afin de déplacer le véhicule dans la direction latérale pour garer le véhicule sur la surface de stationnement.

3. Appareil selon la revendication 1 ou 2, dans lequel, lorsque la surface de stationnement est disponible pour le stationnement dans la direction longitudinale, le processeur est configuré pour vérifier si l'angle de la direction longitudinale du véhicule est identique à l'angle de la direction longitudinale de la surface de stationnement ou à l'angle d'un grand côté d'un rectangle délimitant la surface de stationnement.

4. Appareil selon la revendication 3, dans lequel, lorsque l'angle de la direction longitudinale du véhicule n'est pas identique à l'angle de la direction longitudinale de la surface de stationnement ou à l'angle du grand côté du rectangle délimitant la surface de stationnement, le processeur est configuré pour commander le module d'entraînement des roues avant et le module d'entraînement des roues arrière dans des directions opposées l'une à l'autre afin de faire tourner le véhicule de telle sorte que l'angle de la direction longitudinale de la surface de stationnement et l'angle de la direction longitudinale du véhicule soient identiques.

5. Appareil selon la revendication 4, dans lequel, lorsque l'angle de la direction longitudinale du véhicule devient identique à l'angle de la direction longitudinale de la surface de stationnement ou à l'angle du grand côté du rectangle délimitant la surface de stationnement, le processeur est configuré pour commander simultanément le module d'entraînement des roues avant et le module d'entraînement des roues arrière en mode CRAB afin de déplacer le véhicule dans la direction latérale dans une plage dans laquelle le véhicule peut entrer dans la surface de stationnement, puis pour déplacer le véhicule dans la direction longitudinale sur la surface de stationnement afin de garer le véhicule.

6. Procédé de commande d'un véhicule à quatre roues directrices indépendantes, le procédé comprenant:

la détection (S102, S105), par un processeur (130), d'un angle de la direction longitudinale d'une surface de stationnement et d'un angle de la direction longitudinale d'un véhicule à l'aide d'un module de capteur (120) lors du stationnement en mode CRAB d'un véhicule à quatre roues directrices indépendantes;
la réalisation (S103, S104, S106, S107), par le processeur, du stationnement par le biais d'une commande sélective d'un module d'entraînement des roues avant et d'un module d'entraînement des roues arrière, sur la base des informations détectées par le module de capteur, en tenant compte d'au moins l'un parmi un angle entre le véhicule et la surface de stationnement, une position et la forme de la surface de stationnement, et la direction d'entrée du véhicule sur la surface de stationnement;
le fait de vérifier si la place de stationnement est disponible pour le stationnement dans la direction latérale ou dans la direction longitudinale, sur la base des informations détectées par le module de capteur; et
le fait de vérifier si la direction longitudinale du véhicule est parallèle à la direction longitudinale de la surface de stationnement ou à un grand côté d'un rectangle qui délimite la surface de stationnement, lorsque la surface de stationnement est disponible pour le stationnement dans la direction latérale; et
**caractérisé par**:

- lorsque la direction longitudinale du véhicule n'est pas parallèle à la direction longitudinale de la surface de stationnement, la commande d'un module d'entraînement qui entraîne la roue la plus éloignée du grand côté de la surface de stationnement, parmi le module d'entraînement des roues avant et le module d'entraînement des roues arrière, conformément à un réglage spécifié, afin de permettre au module d'entraînement de se rapprocher de la surface de stationnement de manière à ce que la direction longitudinale du véhicule devienne parallèle à la direction longitudinale de la surface de stationnement;
ou

- lorsque la direction longitudinale du véhicule n'est pas parallèle à la direction longitudinale de la surface de stationnement, la commande du module d'entraînement qui entraîne une roue située le plus près du grand côté de la surface de stationnement, parmi le module d'entraînement des roues avant et le module d'entraînement des roues arrière, conformément à un réglage spécifié, afin de permettre au module d'entraînement de s'éloigner de la surface de stationnement de sorte que la direction longitudinale du véhicule devienne parallèle à la direction longitudinale de la surface de stationnement.

# FIG.1

(a)  (b)  (c)

# FIG.2

(a)

(b)

(c)

# FIG.3

EP 4 549 289 B1

# FIG.4

START CRAB MODE (PARKING)

S101
IS PARKING SURFACE AVAILABLE FOR PARKING IN LATERAL DIRECTION?

N (PARKING SURFACE AVAILABLE FOR PARKING IN LONGITUDINAL DIRECTION)

Y

S102
IS LONGITUDINAL DIRECTION OF VEHICLE PARALLEL TO LONGITUDINAL DIRECTION OF PARKING SURFACE?

REPEAT

Y

S105
IS ANGLE OF LONGITUDINAL DIRECTION OF VEHICLE IDENTICAL TO ANGLE OF LONGITUDINAL DIRECTION OF PARKING SURFACE?

Y

REPEAT

N

S103
CONTROL STEERING APPARATUS OF WHEEL THAT IS FURTHER AWAY FROM LONG SIDE OF PARKING SURFACE TO ALLOW STEERING APPARATUS TO APPROACH PARKING SURFACE (OR CONTROL STEERING APPARATUS OF WHEEL THAT IS CLOSER TO LONG SIDE OF PARKING SURFACE TO MOVE AWAY FROM PARKING SURFACE),AMONG FRONT-WHEEL /REAR-WHEEL STEERING APPARATUS

N

S106
CONTROL FRONT-WHEEL AND REAR-WHEEL STEERING APPARATUS IN OPPOSITE DIRECTIONS TO EACH OTHER TO ROTATE VEHICLE SO THAT ANGLES OF LONGITUDINAL DIRECTION OF VEHICLE AND PARKING SURFACE ARE IDENTICAL

CONTROL FRONT-WHEEL/REAR-WHEEL STEERING APPARATUS SIMULTANEOUSLY TO MOVE VEHICLE ONTO PARKING SURFACE IN LATERAL DIRECTION

CONTROL FRONT-WHEEL/REAR-WHEEL STEERING APPARATUS SIMULTANEOUSLY TO MOVE VEHICLE IN LATERAL DIRECTION WITHIN RANGE OF PARKING SURFACE AND THEN MOVE VEHICLE IN LONGITUDINAL DIRECTION WITHIN PARKING SURFACE

S104

END

S107

EP 4 549 289 B1

FIG.5

# FIG.6

SHORT SIDE

LATERAL DIRECTION → LATERAL DIRECTION

LONG SIDE

LONGITUDINAL DIRECTION    LONGITUDINAL DIRECTION

(a)    (b)    (c)    (d)

# FIG.7

X Target
Point

# FIG.8

PARKING SPACE
(PARKING SURFACE)

$O_f(0,y_1)$

$V_f(x_f,y_f)$

VEHICLE

L

$V_r(x_r,y_r)$

$O_r(0,0)$

# FIG.9

$O_f(0,y_1)$

$V_f(x_f,y_f)$

$L$

X Target
Point

$V_r(x_r,y_r)$

$O_r(0,0)$

# FIG.10

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102274120
- JP 2009078693 A
- DE 102005025203 A1